# EUROPÄISCHE PATENTSCHRIFT

(11) **EP 4 594 992 B1**
(45) Veröffentlichungstag und Bekanntmachung des Hinweises auf die Patenterteilung: **29.04.2026**
(21) Anmeldenummer: 23736028.4
(22) Anmeldetag: 26.06.2023
(51) Int. Cl.: G06T 3/4038, G06T 5/50, G06T 5/80

(54) **ZUSAMMENFÜGEN VON TEILBILDERN EINES FAHRZEUGUMFELDS**
STITCHING SUB-IMAGES OF A VEHICLE ENVIRONMENT
ASSEMBLAGE DE SOUS-IMAGES D'UN ENVIRONNEMENT DE VÉHICULE

(30) Priorität: 29.09.2022 DE 102022125210
(43) Veröffentlichungstag der Anmeldung: 06.08.2025
(73) Patentinhaber: Bayerische Motoren Werke Aktiengesellschaft, 80809 München (DE)
(72) Erfinder: HOFFMANN, Philipp, 30539 Hannover (DE)
(86) Internationale Anmeldenummer: PCT/EP2023/067344
(87) Internationale Veröffentlichungsnummer: WO 2024/068060

(56) Entgegenhaltungen:
- WO-A1-2013/113373
- DE-A1- 102019 104 397
- DE-A1- 102020 109 997
- US-A1- 2020 099 824
- US-A1- 2022 041 105

## Beschreibung

Die vorliegende Erfindung betrifft das Zusammenfügen von Teilbildern aus einem Fahrzeugumfeld. Insbesondere betrifft die Erfindung das Zusammenfügen von Teilbildern, die von unterschiedlichen Positionen und/oder mit unterschiedlichen Sichtfeldern angefertigt sind.

Ein Fahrzeug, insbesondere ein Kraftfahrzeug, umfasst ein Kamera-Monitor-System (Camera Monitor System, CMS), das dazu eingerichtet ist, einen konventionellen Außenspiegel abzulösen. Dazu umfasst das CMS eine seitlich am Fahrzeug angebrachte Kamera, deren Sichtfeld sich entgegen der Fahrtrichtung des Fahrzeugs öffnet. Ein durch die Kamera bereitgestelltes Bild kann im Inneren des Fahrzeugs auf einem Monitor dargestellt werden. Der Monitor liegt bevorzugt im Bereich einer Sichtachse eines Fahrers zur Kamera. Das CMS kann zusätzlich eine Verarbeitungseinrichtung umfassen, um ein von der Kamera bereitgestelltes Bild zu verarbeiten, beispielsweise bezüglich eines Bildausschnitts, einer Helligkeit oder eines Kontrasts.

Ein unmittelbar hinter dem Fahrzeug liegender Bereich kann durch die Kamera nicht eingesehen werden. Es wurde vorgeschlagen, am Heck des Fahrzeugs eine weitere Kamera vorzusehen und Bilder der beiden Kameras derart zusammenzuführen, dass sich ein Gesamtbild ergibt. Das Gesamtbild kann horizontal versetzt zwei verschiedene Abschnitte aufweisen, die von den unterschiedlichen Kameras stammen. Zwischen den beiden Abschnitten kann eine Fügelinie bestehen. Das Zusammenfügen ("stitching") erfolgt bevorzugt derart, dass sich im Bereich der Fügelinie keine optischen Fehler ergeben. Insbesondere soll ein Objekt, das sich auf dem Gesamtbild über die Fügelinie hinweg erstreckt, möglichst vollständig und störungsfrei dargestellt werden.

DE 10 2014 213 536 A1 schlägt ein Fahrerassistenzsystem zum Zusammenfügen von Teilbildern zu einem Gesamtbild aus einem zusammenhängenden Umgebungsbereich eines Fahrzeugs vor.

DE 10 2017 217 870 A1 beschreibt ein ähnliches Verfahren, bei dem eine Fügelinie zwischen einem ersten und einem zweiten Abschnitt des Gesamtbilds auf der Basis eines Signals einer Sensoranordnung bestimmt wird.

DE 10 2020 109 997 A1 beschreibt ein System und Verfahren für ein Stitching von Bildern.

DE 10 2019 104 397 A1 beschreibt eine Bildsynthesevorrichtung, die aus mehreren Einheiten besteht.

WO 20013/113373 A1 beschreibt ein Verfahren in einem elektronischen Gerät zur Erstellung eines kombinierten Bildes. Das Verfahren umfasst das Erfassen eines ersten Satzes von mindestens zwei Teilbildern mit einer Array-Kamera sowie das Erfassen eines zweiten Satzes von mindestens zwei Teilbildern.

Da die Kameras unterschiedliche optische Perspektiven besitzen, kann das Zusammenfügen bzw. das Auswählen eines passenden Abschnitts eines der Bilder der Kameras unterschiedlichen Anforderungen unterworfen sein, wenn sich das Objekt in unterschiedlichen Entfernungen befindet.

Bisherige Techniken können nicht immer zuverlässig verhindern, dass ein hinter dem Fahrzeug liegendes Objekt vollständig dargestellt wird, insbesondere wenn sich das Objekt gegenüber dem Fahrzeug bewegt. Eine der vorliegenden Erfindung zugrunde liegende Aufgabe besteht in der Angabe einer verbesserten Technik zum Zusammenfügen von Teilbildern eines Umfelds eines Fahrzeugs zu einem Gesamtbild bezüglich eines Objekts, das beide Teilbilder überlappt. Die Erfindung löst diese Aufgabe mittels der Gegenstände der unabhängigen Ansprüche. Unteransprüche geben bevorzugte Ausführungsformen wieder.

Nach einem ersten Aspekt der vorliegenden Erfindung umfasst ein Verfahren zum Zusammenfügen von Teilbildern eines Umfelds eines Fahrzeugs zu einem Gesamtbild Schritte des Erfassens eines ersten Teilbilds in einem ersten Bereich des Umfelds, wobei der erste Bereich seitlich hinter dem Fahrzeug liegt; des Erfassens eines zweiten Teilbilds in einem zweiten Bereich des Umfelds, wobei der zweite Bereich hinter dem Fahrzeug liegt; des Erfassens eines Objekts, von dem wenigstens ein Abschnitt in einem der Bereiche liegt; des Bestimmens eines Abstands des Objekts vom Fahrzeug; des Anpassens des zweiten Teilbilds in Abhängigkeit des Abstands; und des Zusammenfügens der Teilbilder zum Gesamtbild.

Der erste Bereich kann beispielsweise mittels einer Seitenkamera abgetastet werden, die seitlich des Fahrzeugs angebracht und nach hinten ausgerichtet ist. Der erste Bereich entspricht bevorzugt im Wesentlichen dem Bereich, der mittels eines konventionellen Außenspiegels eingesehen werden kann. Der zweite Bereich kann mittels einer Heckkamera abgetastet werden, die mittig oder seitlich, bevorzugt auf derselben Seite wie die Seitenkamera, am Fahrzeug angebracht ist und die unmittelbar nach hinten orientiert ist. Der zweite Bereich kann einem Bereich ähneln, der mittels eines üblichen Innenspiegels eingesehen werden kann, hat aber einen nach hinten versetzten Standpunkt und ist nicht durch ein Heckfenster eingeschränkt.

Das Anpassen des zweiten Teilbilds kann insbesondere ein Skalieren umfassen. Das Skalieren erfolgt weiter bevorzugt homografisch erfolgen, wobei eine linientreue Abbildung durchgeführt werden kann, insbesondere eine Kollineation. Das Objekt liegt bevorzugt wenigstens abschnittsweise im zweiten Bereich. Sollte sich das Objekt bezüglich des Fahrzeugs seitlich bewegen, kann es in den ersten Bereich eintreten. Durch das frühzeitige Anpassen des zweiten Teilbilds kann dabei keine optische Auffälligkeit im Gesamtbild merklich sein.

Da nur eines der Teilbilder dynamisch angepasst wird, kann das Verfahren weniger störanfällig sein. Ein bereitgestelltes Gesamtbild kann insgesamt ruhiger erscheinen und weniger häufig Änderungen ausgesetzt sein. Insbesondere kann verhindert werden, dass das Objekt beim Zusammenfügen der Teilbilder teilweise oder vollständig verlorengeht, sodass es auf dem Gesamtbild nicht oder nicht vollständig erscheint. Eine Person, die das Gesamtbild zur Beurteilung einer Verkehrssituation im Bereich des Fahrzeugs heranzieht, insbesondere ein Fahrer an Bord des Fahrzeugs, kann durch das Gesamtbild auf verbesserte Weise informiert sein. Ein Übersehen des Objekts kann weniger wahrscheinlich sein. So kann eine Kollision mit dem Objekt verbessert vermieden werden.

Das Objekt kann insbesondere einen anderen Verkehrsteilnehmer, beispielsweise ein Kraftfahrzeug, einen Radfahrer oder einen Fußgänger umfassen. Der Verkehrsteilnehmer kann stillstehen, sich in derselben oder einer anderen Richtung als das Fahrzeug oder auch seitlich zum Fahrzeug bewegen. Das Objekt kann auch eine andere Einrichtung umfassen, beispielsweise ein Verkehrsschild, eine Parkbank oder ein Gebäude. Solche Einrichtungen können insbesondere beim Rückwärtsfahren des Fahrzeugs, beispielsweise beim Ein- oder Ausparken, potentielle Kollisionspartner darstellen. Durch deren verbesserte Darstellung auf dem Gesamtbild kann die Gefahr einer Kollision verbessert vermieden werden.

In einer Ausführungsform erfolgt die Anpassung erst dann, wenn das Objekt in beiden Teilbildern abgebildet ist bzw. wenn es in beiden Bereichen liegt. An einem Übergang zwischen dem ersten und dem zweiten Teilbild kann ein Übergangsbereich gebildet sein, welcher der Fügelinie folgt, aber eine vorbestimmte horizontale Ausdehnung aufweist. Beispielsweise kann der Übergangsbereich links und rechts der Fügelinie je ca. 50 Pixel breit sein. Die Anpassung kann erfolgen, wenn sich das Objekt über eine linke oder rechte Begrenzung des Übergangsbereichs hinweg erstreckt. Dabei kann eine bezüglich der Bewegung des Objekts vordere oder hintere Begrenzung ausgewertet werden.

Es ist bevorzugt, dass das Gesamtbild einen ersten Abschnitt umfasst, der aus dem ersten Teilbild übernommen ist und der einen Bereich des Umfelds außerhalb des Fahrzeugs darstellt; und einen zweiten Abschnitt, der aus dem zweiten Teilbild entnommen ist und der einen hinter dem Fahrzeug liegenden Bereich des Umfelds darstellt.

Sensoren zur Bereitstellung der Teilbilder können an unterschiedlichen Positionen in Längsrichtung des Fahrzeugs angebracht sein, sodass sie unterschiedliche Abstände zum Objekt aufweisen können. Außerdem können Bildwinkel der Sensoren unterschiedlich sein, sodass die nicht angepassten Teilbilder dasselbe Objekt unterschiedlich groß darstellen können.

Es ist bevorzugt, dass eine Fügelinie, die den ersten Abschnitt auf dem Gesamtbild begrenzt, auf der Basis von Perspektiven und Abbildungsparametern der Teilbilder fest vorbestimmt ist. Eine Perspektive kann von einer Position eines zugeordneten Sensors bezüglich des Fahrzeugs abhängig sein. Ein Abbildungsparameter kann insbesondere einen Bildwinkel oder eine Brennweite des Sensors umfassen.

Die Fügelinie kann zwischen dem ersten und dem zweiten Abschnitt verlaufen. Optional ist die Fügelinie im Gesamtbild dargestellt oder optisch hervorgehoben. Die Fügelinie kann einer Kontur des Fahrzeugs auf dem ersten Teilbild folgen. Der Verlauf der Fügelinie auf dem Gesamtbild kann vorbestimmt und unveränderlich sein. Das zweite Teilbild wird bevorzugt derart angepasst, dass ein im Bereich der Fügelinie liegender Abschnitt des Objekts im ersten Teilbild und im angepassten zweiten Teilbild gleich groß erscheinen.

Weiter bevorzugt umfasst das Gesamtbild einen dritten Abschnitt, der einen zwischen dem Fahrzeug und dem Objekt liegenden Bereich verdeckt, falls sich ein weiteres Objekt in diesem Bereich befindet. Der dritte Abschnitt kann vom zweiten Abschnitt umfasst sein. Insbesondere liegt der dritte Bereich für einen Betrachter des Gesamtbilds scheinbar unterhalb des Objekts im zweiten Abschnitt. Befindet sich in diesem Bereich kein weiteres Objekt, so kann ein optischer Fehler zwischen dem dritten Abschnitt und einem jenseits der Fügelinie liegenden Bereich hingenommen werden. Befindet sich zwischen dem Fahrzeug und dem Objekt jedoch ein weiteres Objekt, so kann auf dessen Darstellung verzichtet werden, um einen Bildfehler in diesem Bereich zu vermeiden. Ein Fahrer kann verbessert über das Objekt informiert werden, ohne ein möglicherweise gestört dargestelltes weiteres Objekt im Gesamtbild beurteilen zu müssen.

Das weitere Objekt kann sich unabhängig von dem anderen Objekt gegenüber dem Fahrzeug bewegen. Tritt das weitere Objekt in den Bereich zwischen dem Fahrzeug und dem Objekt ein, so kann der dritte Abschnitt mit einem vorbestimmten Übergang sanft ausgeblendet werden. Ein Betrachter des Gesamtbilds kann dadurch weniger verwirrt bzw. alarmiert werden.

In einer weiter bevorzugten Ausführungsform ist der dritte Abschnitt aus dem ersten Teilbild entnommen und zeigt das Fahrzeug. Anders ausgedrückt kann im zweiten Abschnitt ein hinter dem Fahrzeug liegender Bereich derart eingeblendet werden, dass sich für einen Betrachter des Gesamtbilds der Eindruck einstellt, das Fahrzeug wäre transparent. Zum Verdecken des dritten Abschnitts kann ein korrespondierender Teil des Fahrzeugs wieder opak dargestellt werden. In einer anderen Ausführungsform kann anstelle des Fahrzeugs auch ein vorbestimmtes Bild dargestellt werden. Ein Betrachter kann mittels des Bilds darauf hingewiesen werden, dass ein erkanntes Objekt in diesem Bereich beabsichtigterweise nicht dargestellt wird.

In entsprechender Weise kann das Gesamtbild einen vierten Abschnitt umfassen, der einen scheinbar oberhalb des Objekts liegenden Bereich verdeckt. Der vierte Abschnitt kann wie der dritte bei Bedarf mit einem vorbestimmten Bild oder einem Abschnitt des ersten Teilbilds ausgefüllt werden, um das Darstellen eines Bildfehlers in diesem Bereich zu vermeiden.

Es ist weiterhin bevorzugt, dass für mehrere vorbestimmte Abstände zwischen dem Fahrzeug und dem Objekt Anpassungen des zweiten Teilbilds vorbestimmt sind. Beispielsweise können die Abstände jeweils ein Vielfaches von ca. 5 Metern umfassen. In einer Ausführungsform sind ca. 11 Abstände vorgesehen. Ein geringster Abstand kann im Bereich von ca. 1 bis 2 Meter liegen. Ein am weitesten entfernter Abstand kann im Bereich von ca. 47 bis 50 Metern liegen. Es hat sich gezeigt, dass durch eine einstellige oder geringe zweistellige Anzahl vorbestimmter Abstände viele Darstellungsaufgaben befriedigend lösen lassen, ohne eine Anpassung dynamisch erzeugen zu müssen. In dieser Ausführungsform ist bevorzugt, dass eine Anpassung verwendet wird, deren zugeordneter Abstand dem bestimmten Abstand am nächsten kommt. Alternativ kann zu einem bestimmten Abstand auch eine Anpassung verwendet werden, deren zugeordneter Abstand der nächst kürzere oder der nächst längere ist.

In einer anderen Ausführungsform wird bezüglich einer ersten vorbestimmten Anpassung, deren zugeordneter Abstand kleiner als der bestimmte Abstand ist, und einer zweiten vorbestimmten Anpassung, deren zugeordneter Abstand größer als der bestimmte Abstand ist, eine Anpassung interpoliert und auf das zweite Teilbild angewendet. Die Interpolation kann bezüglich eines oder mehrerer Parameter einer Anpassung erfolgen. In einer Ausführungsform ist eine Anpassung durch einen Skalierungsfaktor bestimmt. In einer anderen Ausführungsform kann zusätzlich eine Verschiebung in horizontaler und/oder vertikaler Richtung als Parameter umfasst sein. Weitere Parameter sind ebenfalls möglich. Optional kann auch eine Extrapolation der Anpassungen erfolgen, falls der Abstand des Objekts außerhalb des Bereichs liegt, in denen vorbestimmte Anpassungen bekannt sind.

Das Verfahren kann berücksichtigen, dass sich im Umfeld des Fahrzeugs mehrere Objekte befinden. Ein Objekt kann zumindest abschnittsweise im ersten bzw. im zweiten Bereich liegen.

In einer Ausführungsform wird von mehreren Objekten im Umfeld des Fahrzeugs, eines ausgewählt, dessen Abstand zum Fahrzeug am geringsten ist. Das dem Fahrzeug am nächsten liegende Objekt kann für das Führen des Fahrzeugs am relevantesten sein.

In einer anderen Ausführungsform wird von mehreren Objekten im Umfeld des Fahrzeugs eines ausgewählt, dessen voraussichtliche Zeit bis zum Erreichen des Fahrzeugs am geringsten ist. So kann insbesondere ein Objekt als relevant bestimmt werden, wenn es sich dem Fahrzeug nähert, als ein anderes, dessen Abstand zum Fahrzeug gleich bleibt oder sich vergrößert.

In noch einer weiteren Ausführungsform wird von mehreren Objekten im Umfeld des Fahrzeugs eines ausgewählt, das bezüglich einer Kollision mit dem Fahrzeug am empfindlichsten ist. Anders ausgedrückt kann ein Objekt ausgewählt werden, dessen Kollision mit dem Fahrzeug in einem größten zu erwartenden Schaden resultiert. So kann ein Fußgänger als empfindlicher als ein Radfahrer, dieser als empfindlicher als ein Motorrad, das Motorrad als empfindlicher als ein Auto und dieses als empfindlicher als ein Lastkraftwagen eingestuft werden.

Es ist zu beachten, dass die genannten Strategien zur Auswahl eines von mehreren Objekten im Umfeld des Fahrzeugs auch miteinander kombiniert werden können. Beispielsweise kann zunächst nur eine der Herangehensweisen verwendet werden, solange diese nur ein Objekt bestimmt. Werden mittels der gewählten Herangehensweise mehr als ein Objekt als gleichwertig bestimmt, so kann eine zweite vorbestimmte Herangehensweise verwendet werden, um unter diesen ein Objekt auszuwählen. Optional kann noch eine weitere Herangehensweise nachgeschaltet werden.

Es ist ferner zu beachten, dass die hierin beschriebene Technik auf eine verbesserte Darstellung kombinierter Teilbilder an einen Fahrer des Fahrzeugs abzielt und nicht auf eine Steuerung des Fahrzeugs, die unter Umständen die Bestimmung des relevantesten Objekts auf andere Kriterien stützt. Allerdings können für beide Systeme gemeinsame Sensoren oder Abtastsysteme verwendet werden. Auch eine Vorverarbeitung eines bereitgestellten Teilbilds, beispielsweise durch Generieren eines Rahmens um ein Objekt, kann für beide Systeme erfolgen.

Ein erster Sensor zur Bereitstellung des ersten Teilbilds kann auf der Basis eines optisch erfassbaren Merkmals des Fahrzeugs im ersten Bereich kalibriert werden. Anders ausgedrückt kann eine Ausrichtung des ersten Sensors bezüglich des Fahrzeugs bzw. des Umfelds überprüft und gegebenenfalls korrigiert werden, indem die Lage des Merkmals im bereitgestellten Teilbild überprüft wird. So kann sichergestellt sein, dass der dem ersten Teilbild entnommene erste Abschnitt des Gesamtbilds verbessert lagerichtig ist.

Ein zweiter Sensor zur Bereitstellung des zweiten Teilbilds kann mittels eines Lagesensors kalibriert werden. Der Lagesensor kann die Ausrichtung des zweiten Sensors gegenüber dem Fahrzeug bzw. dem Umfeld anzeigen. Hierzu kann ein Gyroskop bzw. eine Inertialplattform verwendet werden. Eine Drift des Lagesensors kann bezüglich des ersten Teilbilds korrigiert werden.

Nach einem zweiten Aspekt der vorliegenden Erfindung umfasst eine Vorrichtung zum Zusammenfügen von Teilbildern eines Umfelds eines Fahrzeugs zu einem Gesamtbild folgende Elemente: einen ersten Sensor zur Erfassung eines ersten Teilbilds in einem ersten Bereich des Umfelds, wobei der erste Bereich seitlich hinter dem Fahrzeug liegt; einen zweiten Sensor zur Erfassung eines zweiten Teilbilds in einem zweiten Bereich des Umfelds, wobei der zweite Bereich hinter dem Fahrzeug liegt; einen dritten Sensor zur Bestimmung eines Abstands eines Objekts, von dem im ersten und im zweiten Bereich jeweils zumindest ein Abschnitt liegt, vom Fahrzeug; und eine Verarbeitungseinrichtung. Dabei ist die Verarbeitungseinrichtung dazu eingerichtet, das zweite Teilbild in Abhängigkeit des Abstands anzupassen und die Teilbilder zum Gesamtbild zusammenzufügen.

Die Verarbeitungseinrichtung kann dazu eingerichtet sein, ein hierin beschriebenes Verfahren ganz oder teilweise auszuführen. Dazu kann die Verarbeitungseinrichtung elektronisch ausgeführt sein und beispielsweise einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Der erste Sensor kann insbesondere eine Seitenkamera umfassen, die bevorzugt in einem Bereich angebracht ist, in dem ansonsten ein konventioneller Außenspiegel angebracht ist. Der zweite Sensor kann eine Heckkamera umfassen, die an einem hinteren Ende des Fahrzeugs angebracht ist. Die Heckkamera kann mittig oder seitlich versetzt am Fahrzeug angebracht sein, bevorzugt in Richtung der Seitenkamera. Der dritte Sensor kann beispielsweise einen Radarsensor, einen LiDAR-Sensor oder einen Ultraschallsensor umfassen. Der dritte Sensor ist bevorzugt ebenfalls im Bereich des Hecks des Fahrzeugs angebracht. Positionen der Sensoren am Fahrzeug und Bildwinkel des ersten und zweiten Sensors sind bevorzugt vorbestimmt und unveränderlich.

In einer weiteren Ausführungsform ist ein Lagesensor zur Bestimmung einer Ausrichtung des zweiten Sensors gegenüber dem Umfeld vorgesehen. Der Lagesensor kann ein Signal bereitstellen, das zur Ausrichtung des zweiten Sensors korrespondiert. Das von ihm bereitgestellte zweite Teilbild kann so verbessert angepasst werden, um lagerichtig bezüglich des ersten Teilbilds zu sein.

Nach wieder einem weiteren Aspekt der vorliegenden Erfindung umfasst ein Fahrzeug eine hierin beschriebene Vorrichtung.

Die Erfindung wird nun mit Bezug auf die beigefügten Zeichnungen genauer beschrieben, in denen:
- Figur 1: eine Vorrichtung an Bord eines Fahrzeugs;
- Figur 2: ein Ablaufdiagramm eines Verfahrens;
- Figur 3: ein aus einem ersten Teilbild und einem zweiten Teilbild zusammengefügtes Gesamtbild in einer ersten Ausführungsform;
- Figur 4: ein aus einem ersten Teilbild und einem zweiten Teilbild zusammengefügtes Gesamtbild in einer zweiten Ausführungsform;
- Figur 5: einen schematischen Zusammenhang zwischen einem Abstand und einem Skalierungsfaktor
illustriert.

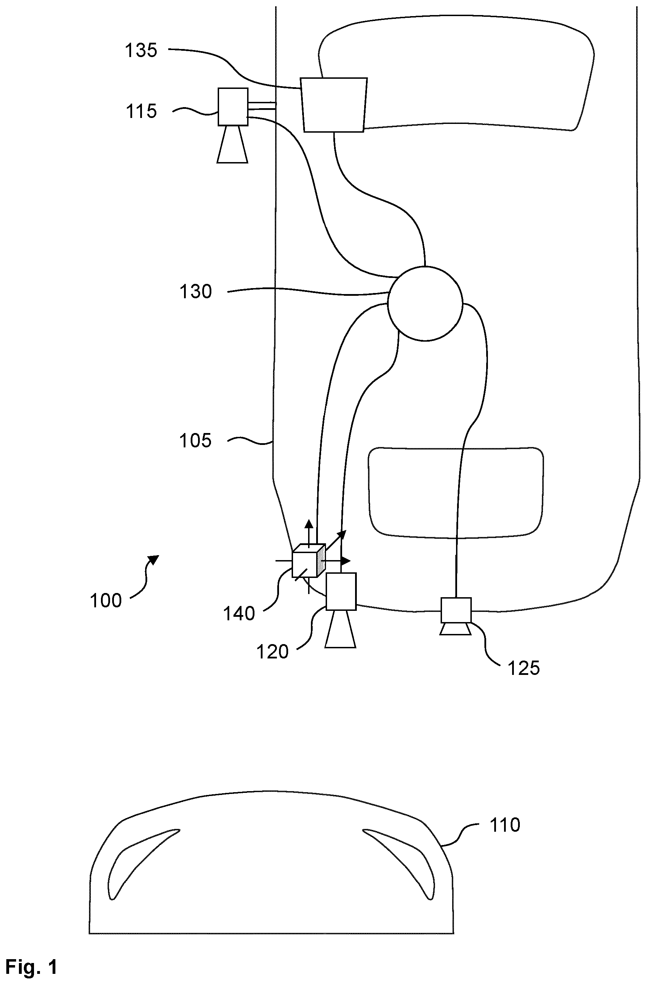

Figur 1 zeigt eine Vorrichtung 100 an Bord eines Fahrzeugs 105. Das Fahrzeug 105 umfasst bevorzugt ein Kraftfahrzeug, insbesondere ein Kraftrad, einen Personenkraftwagen, einen Lastkraftwagen oder einen Omnibus. Eine Fahrtrichtung des Fahrzeugs 105 verläuft in der Darstellung von Figur 1 von unten nach oben. Hinter dem Fahrzeug 105 befindet sich ein Objekt 110, das beispielhaft als weiteres Fahrzeug dargestellt ist. Die Vorrichtung 100 umfasst bevorzugt eine erste Kamera 115, eine zweite Kamera 120, einen Abstandssensor 125 und eine Verarbeitungseinrichtung 130. Die erste Kamera 115 ist seitlich am Fahrzeug 105 angebracht und dazu eingerichtet, einen seitlich und hinter dem Fahrzeug 105 liegenden Bereich abzutasten. Die zweite Kamera 120 ist in einem Bereich des Hecks des Fahrzeugs 105 angebracht und dazu eingerichtet, einen hinter dem Fahrzeug 105 liegenden Bereich abzutasten. Dabei ist bevorzugt, dass sich die beiden Bereiche überlappen. Der Abstandssensor 125 ist bevorzugt ebenfalls am Heck des Fahrzeugs 105 angebracht.

Die Verarbeitungseinrichtung 130 ist dazu eingerichtet, ein mittels der ersten Kamera 115 bereitgestelltes erstes Teilbild und ein mittels der zweiten Kamera 120 bereitgestelltes zweites Teilbild zu einem Gesamtbild zusammenzufügen. In einer Ausführungsform ist ein Monitor 135 vorgesehen, um das Gesamtbild an Bord des Fahrzeugs 105 darzustellen. Die Vorrichtung 100 kann in diesem Sinn als Kamera-Monitor-System arbeiten.

Optional ist im Bereich der zweiten Kamera 120 ein Lagesensor 140 vorgesehen, um eine Ausrichtung der zweiten Kamera 120 zu bestimmen. Die Verarbeitungseinrichtung 130 ist bevorzugt dazu eingerichtet, eine Abweichung der Ausrichtung der zweiten Kamera 120 gegenüber einer vorbestimmten Ausrichtung auf der Basis von Signalen des Lagesensors 140 zu erkennen und optional zu kompensieren. Dazu kann die Ausrichtung der zweiten Kamera 120 mittels eines entsprechenden Aktors verändert oder das bereitgestellte zweite Teilbild passend verschoben werden.

Die Verarbeitungseinrichtung 130 kann auch eine Ausrichtung der ersten Kamera 115 gegenüber dem Fahrzeug 105 überprüfen, indem beispielsweise die Lage eines optisch erkennbaren Merkmals des Fahrzeugs 105 im ersten Teilbild mit einer vorbestimmten Lage verglichen wird. Optional kann auch hier eine Kompensation mittels Aktor oder durch Anpassen des ersten Teilbilds erfolgen.

Es ist zu beachten, dass am Fahrzeug 105 zwei Vorrichtungen 100 eingesetzt werden können, die optional teilweise miteinander integriert ausgeführt sind. In der dargestellten Ausführungsform liegen die erste Kamera 115, die zweite Kamera 120, der Monitor 135 und der Lagesensor 140 auf der linken Seite des Fahrzeugs 105. Entsprechende Elemente können auch auf der rechten Seite des Fahrzeugs 105 vorgesehen sein. Beispielsweise die Verarbeitungseinrichtung 130 und/oder der Abstandssensor 125 können für beide Seiten einsetzbar sein.

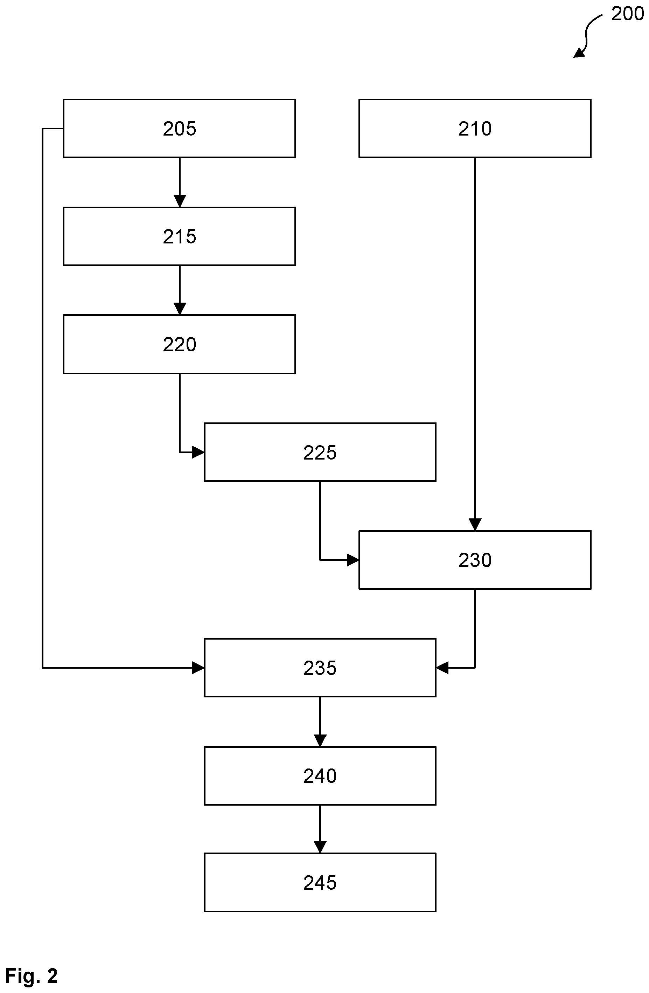

Figur 2 zeigt ein Ablaufdiagramm eines Verfahrens 200 zum Zusammenfügen von Teilbildern. Das Verfahren 200 kann insbesondere mittels einer Vorrichtung 100 durchgeführt werden.

In einem Schritt 205 kann mittels der ersten Kamera 115 ein erster Bereich des Umfelds des Fahrzeugs 105 abgetastet und ein erstes Teilbild erstellt werden. In entsprechender Weise kann in einem Schritt 210 mittels der zweiten Kamera 120 ein zweiter Bereich des Umfelds des Fahrzeugs 105 abgetastet und ein zweites Teilbild erstellt werden. Es ist bevorzugt, dass sich die Bereiche überlappen, sodass ein Objekt sowohl im ersten als auch im zweiten Teilbild sichtbar sein kann.

In einem Schritt 215 können eines oder mehrere Objekte 110 im Umfeld des Fahrzeugs 105 erkannt werden. Die Erkennung erfolgt bevorzugt auf der Basis des ersten Teilbilds, kann in anderen Ausführungsformen aber auch auf der Basis des zweiten Teilbilds oder eine Abtastung des Umfelds mittels des Abstandssensors 125 erfolgen.

Wurden im Schritt 215 mehrere Objekte 110 bestimmt, so kann eines davon in einem Schritt 220 ausgewählt werden. Dazu kann insbesondere bestimmt werden, welches der Objekte 110 am relevantesten für das Führen oder die Bewegung des Fahrzeugs 105 ist. In einer Ausführungsform kann dasjenige Objekt 110 ausgewählt werden, dessen Abstand zum Fahrzeug 105 am geringsten ist. In einer anderen Ausführungsform kann dasjenige Objekt 110 ausgewählt werden, dessen voraussichtliche Zeit bis zum Erreichen des Fahrzeugs 105 am geringsten ist. Diese Bestimmung kann das Berechnen von Relativgeschwindigkeiten zwischen verschiedenen Objekten 110 und dem Fahrzeug 105 erfordern. Ein Objekt 110, das sich vom Fahrzeug 105 entfernt, kann als nicht relevant verworfen werden. In einer dritten Ausführungsform kann dasjenige Objekt ausgewählt werden, das bezüglich einer Kollision mit dem Fahrzeug 105 am empfindlichsten ist. Dazu kann das Objekt klassifiziert werden und Klassen unterschiedlicher bestimmter Objekte 110 können miteinander verglichen werden.

In einem Schritt 225 kann eine Entfernung zwischen dem Fahrzeug 105 und dem ausgewählten Objekt 110 bestimmt werden. Dazu kann eine Abtastung des Umfelds mittels des Abstandssensors 125 verwendet werden. Der Abstandssensor 125 kann Abstände mehrerer Objekte 110 im Umfeld des Fahrzeugs 105 gleichzeitig bestimmen.

In Abhängigkeit der bestimmten Entfernung kann in einem Schritt 230 das im Schritt 210 bereitgestellte zweite Teilbild angepasst werden. Insbesondere kann eine Größe des zweiten Teilbilds in Abhängigkeit der bestimmten Entfernung angepasst werden.

Bevorzugt ist eine Anzahl Anpassungen vorbestimmt, denen unterschiedliche Abstände zum Fahrzeug 105 zugeordnet sind. In einer beispielhaften Ausführungsform sind Anpassungen für Entfernungen von 2 Meter, 3 Meter, 5 Meter, 7 Meter, 12 Meter, 17 Meter, 22 Meter, 27 Meter, 32 Meter, 37 Meter und 47 Meter vorgesehen. Bevorzugt umfasst jede Anpassung einen Skalierungsfaktor, mit dem das zweite Teilbild vergrößert oder verkleinert werden kann. Weitere mögliche Parameter umfassen einen Fokuspunkt für die Skalierung, eine Verschiebung in horizontaler und/oder vertikaler Richtung, eine Drehung oder eine Entzerrung.

Auf der Basis der bestimmten Entfernung kann eine vorbestimmte Anpassung ausgewählt werden. Alternativ kann eine Anpassung bezüglich zweier oder mehrerer vorbestimmter Anpassungen interpoliert werden. Die Anpassung kann auf das zweite Teilbild angewendet werden, sodass das zweite Teilbild in dem Abstand, den das gewählte Objekt 110 aufweist, die gleiche Vergrößerung aufweist, wie das erste Teilbild.

In einem Schritt 235 können das erste Teilbild und das zweite Teilbild zusammengeführt werden. Das Zusammenführen erfolgt bevorzugt bezüglich einer vorbestimmten Fügelinie, die durch eine Silhouette des Fahrzeugs 105 auf dem ersten Teilbild gebildet sein kann.

In einem optionalen Schritt 240 kann ein Bereich des Gesamtbilds ausgeblendet werden, der aus dem zweiten Teilbild entnommen ist und der unterhalb oder oberhalb des dargestellten Objekts 110 liegt. Der unterhalb liegende Bereich kann insbesondere dann ausgeblendet werden, wenn sich in ihm ein weiteres Objekt befindet. Der oberhalb liegende Bereich kann ebenfalls insbesondere dann ausgeblendet werden, wenn sich in ihm ein weiteres Objekt befindet. Das Ausblenden kann umfassen, dass der entsprechende Bereich auf dem Gesamtbild durch einen Inhalt gefüllt wird, der dem ersten Teilbild entnommen ist. Alternativ kann auch eine vorbestimmte Darstellung eingeblendet werden, beispielsweise eine vorbestimmte Signalfarbe oder ein vorbestimmtes Muster.

In einem Schritt 245 kann das bestimmte Gesamtbild dargestellt werden, insbesondere auf dem Monitor 135.

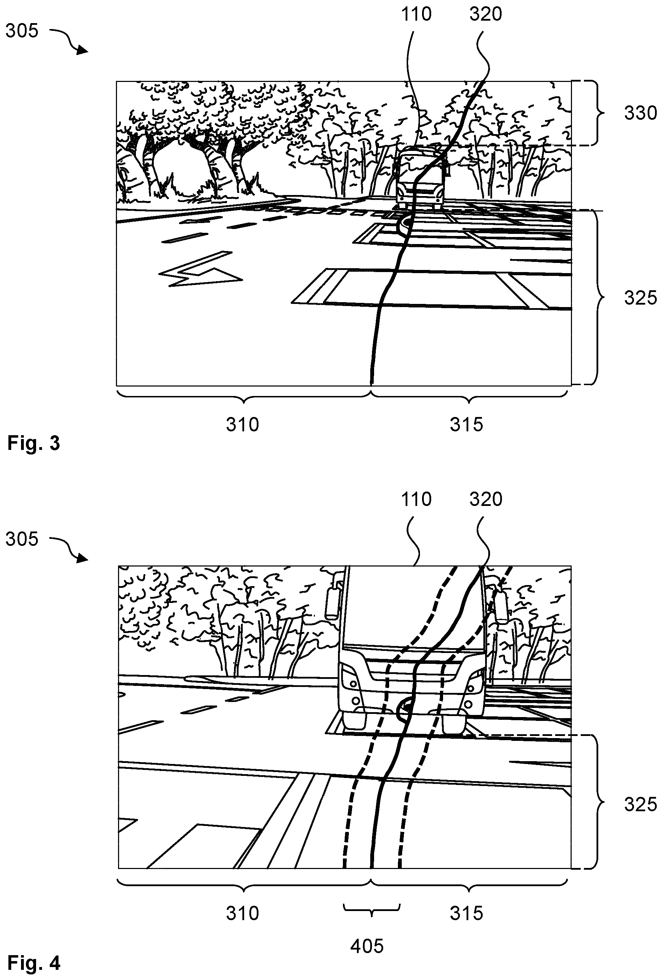

Figur 3 zeigt ein Gesamtbild 305, das einen ersten Abschnitt 310 umfasst, der aus einem ersten Teilbild entnommen ist, und einen zweiten Abschnitt 315, der aus einem zweiten Teilbild entnommen ist. Zwischen den Abschnitten 310 und 315 verläuft eine Fügelinie 320, die bevorzugt die Form einer Silhouette des Fahrzeugs 105 im ersten Teilbild aufweist. Die Fügelinie 320 verläuft entlang einer Begrenzung des Fahrzeugs 105. In einem vertikal mittleren Bereich ist ein Türgriff des Fahrzeugs 105 in der Fügelinie 320 erkennbar.

Ein Teil des Umfelds des Fahrzeugs 105, der im ersten Teilbild durch das Fahrzeug 105 hindurch nicht gesehen werden kann, ist im Gesamtbild 305 durch einen entsprechenden Ausschnitt des zweiten Teilbilds ergänzt. Dazu ist das zweite Teilbild in Abhängigkeit eines Abstands des Objekts 110 vom Fahrzeug 105 skaliert und insbesondere vergrößert.

Das Gesamtbild 305 umfasst einen dritten Abschnitt 325 und einen vierten Abschnitt 330, die jeweils einen Abschnitt des zweiten Abschnitts 315 bilden. Der dritte Abschnitt 325 liegt unterhalb der Darstellung des Objekts 110 im zweiten Abschnitt 315 und der vierte Bereich 330 oberhalb der Darstellung.

Das Objekt 110 ist im Gesamtbild jeweils größentreu in beiden Abschnitten 310, 315 dargestellt. Die Darstellung ist linientreu, sodass eine gerade Linie, die sich über beide Abschnitte 305, 310 hinweg erstreckt, weder eine Unstetigkeit noch eine Richtungsänderung erfährt.

Ist dies der Fall, so kann die Zusammenführung in Abhängigkeit des Abstands zu diesem Objekt 110 angepasst werden. Andernfalls, wenn kein weiteres Objekt 110 vorliegt oder ein vorliegendes Objekt 110 nicht als relevanter als das andere Objekt 110 bestimmt wurde, kann der dritte Abschnitt 325 ausgeblendet werden. Beispielsweise kann im dritten Abschnitt 325 ein passender Abschnitt des Fahrzeugs 105 oder eine vorbestimmte Grafik dargestellt werden. Die vorbestimmte Grafik kann optisch auffällig sein, um anzuzeigen, dass der dritte Abschnitt 325 kein Abbild eines hinter dem Fahrzeug 105 liegenden Bereichs umfasst.

In ähnlicher Weise kann der vierte Abschnitt 330 ausgeblendet bzw. durch eine andere Darstellung überdeckt werden, falls sich in einem Bereich, der aus der dargestellten Perspektive oberhalb bzw. hinter dem Objekt 110 befindet, ein weiteres Objekt 110 liegt, das insbesondere zumindest teilweise im zweiten Abschnitt 315 liegt. Auch hier kann nur ein für das Führen des Fahrzeugs 105 relevantes Objekt 110 berücksichtigt werden.

Es ist zu sehen, dass ein Bildfehler entlang der Fügelinie 320 im Bereich des vierten Abschnitts 330 gering ist, wenn sich das Objekt, in Figur 3 beispielhaft ein Baum, in wesentlich größerer Entfernung zum Fahrzeug 105 als das Objekt 110 befindet, das für die Anpassung verwendet wird. Auf das Ausblenden des vierten Abschnitts 330 kann daher auch verzichtet werden.

Figur 4 zeigt ein Gesamtbild 305 nach Art der Darstellung von Figur 3 unter anderen Bedingungen. Hier ist der Abstand zwischen dem Fahrzeug 105 und dem Objekt 110 kleiner und das Objekt 110 erscheint größer auf dem Gesamtbild 305. Der dritte Abschnitt 325 ist kleiner als in der Darstellung von Figur 3 und der vierte Abschnitt 330 entfällt. Auch hier schließen Bildinhalte, die das Objekt 110 darstellen, auf unterschiedlichen Seiten der Fügelinie 320 mit hoher Genauigkeit aneinander an. Bildinhalte, die einen anderen Abstand zum Fahrzeug 105 einnehmen als das Objekt 110 können jedoch an der Fügelinie 320 nicht stufenlos aneinander anschließen oder im Bereich der Fügelinie 320 einen Knick aufweisen.

In Figur 4 ist ein exemplarischer Übergangsbereich 405 mit unterbrochenen Linien eingezeichnet. Der Übergangsbereich 405 hat exemplarisch in vertikaler Richtung den Verlauf der Fügelinie 320 und eine vorbestimmte horizontale Breite. Bevorzugt liegt die Fügelinie 320 horizontal mittig zum Übergangsbereich 405, sodass eine linke Begrenzung ebenso weit von der Fügelinie 320 entfernt ist wie eine rechte Begrenzung.

Die Anpassung des zweiten Teilbilds kann erst erfolgen, wenn ein Objekt 110 eine linke und/oder rechte Begrenzung des Übergangsbereichs 405 berührt oder überschreitet. Ein Objekt 110 auf dem ersten oder zweiten Teilbild kann mit einem Rahmen (bounding box) versehen werden und die Anpassung kann erfolgen, falls der Rahmen eine der Begrenzungen berührt oder überschreitet. Die Anpassung kann nur erfolgen, falls das Objekt 110 außerdem als relevantestes bestimmt wurde.

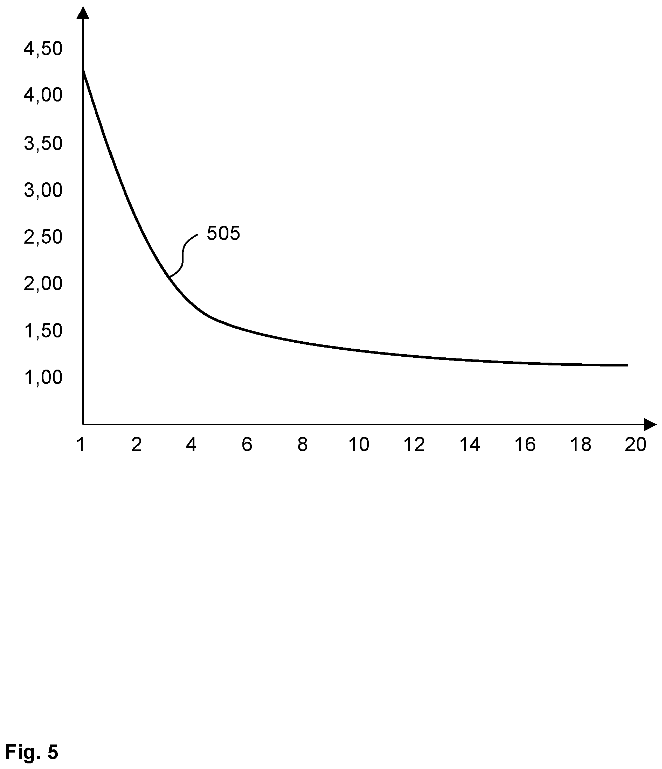

Figur 5 zeigt einen schematischen und beispielhaften Zusammenhang zwischen einem Abstand und einem Skalierungsfaktor. In horizontaler Richtung ist ein Abstand zwischen dem Fahrzeug 105 und dem Objekt 110 dargestellt. In vertikaler Richtung ist ein Skalierungsfaktor angetragen, mit dem das zweite Teilbild angepasst werden muss, um im Bereich des bestimmten Abstands gleich wie das erste Teilbild skaliert zu sein.

In der dargestellten Ausführungsform muss das zweite Teilbild um einen Faktor von annähernd 4,5 skaliert werden, wenn sich das darzustellende Objekt 110 im Abstand von ca. einem Meter befindet. Ein Bildwinkel des ersten Sensors 115 sollte daher um wenigstens diesen Faktor größer als ein Bildwinkel des zweiten Sensors 120 sein. Beträgt beispielsweise der Bildwinkel des zweiten Sensors 120 ca. 34°, so sollte der Bildwinkel des ersten Sensors 115 wenigstens ca. 34 x 4,5 = 153° betragen. Diese Betrachtungen gelten für den vertikalen Bildwinkel; für den horizontalen Bildwinkel können ähnliche Überlegungen angestellt werden.

### Bezugszeichen

- 100: Vorrichtung
- 105: Fahrzeug
- 110: weiteres Fahrzeug
- 115: erste Kamera
- 120: zweite Kamera
- 125: Abstandssensor
- 130: Verarbeitungseinrichtung
- 135: Monitor
- 140: Lagesensor

- 200: Verfahren
- 205: erstes Teilbild erstellen
- 210: zweites Teilbild erstellen
- 215: Objekte erkennen
- 220: Objekt auswählen
- 225: Entfernung zum Objekt bestimmen
- 230: zweites Teilbild anpassen
- 235: Teilbilder zusammenführen
- 240: Bereich ausblenden
- 245: Gesamtbild darstellen

- 305: Gesamtbild
- 310: erster Abschnitt
- 315: zweiter Abschnitt
- 320: Fügelinie
- 325: dritter Abschnitt
- 330: vierter Abschnitt

- 405: Übergangsbereich

## Patentansprüche

1. Verfahren (200) zum Zusammenfügen von Teilbildern eines Umfelds eines Fahrzeugs (105) zu einem Gesamtbild (305), wobei das Verfahren (200) folgende Schritte umfasst:
- Erfassen (205) eines ersten Teilbilds in einem ersten Bereich des Umfelds, wobei der erste Bereich seitlich hinter dem Fahrzeug (105) liegt;
- Erfassen (210) eines zweiten Teilbilds in einem zweiten Bereich des Umfelds, wobei der zweite Bereich hinter dem Fahrzeug (105) liegt;
- Erfassen (215) eines Objekts (110), von dem wenigstens ein Abschnitt in einem der Bereiche liegt;
**gekennzeichnet durch**:
- Bestimmen (225) eines Abstands des Objekts (110) vom Fahrzeug (105);
- Anpassen (230) des zweiten Teilbilds in Abhängigkeit des Abstands; und
- Zusammenfügen (235) der Teilbilder zum Gesamtbild (305).

2. Verfahren (200) nach Anspruch 1, wobei das Gesamtbild (305) einen ersten Abschnitt (310) umfasst, der aus dem ersten Teilbild übernommen ist und der einen Bereich des Umfelds außerhalb des Fahrzeugs (105) darstellt; und einen zweiten Abschnitt (315), der aus dem zweiten Teilbild entnommen ist und der einen hinter dem Fahrzeug (105) liegenden Bereich des Umfelds darstellt.

3. Verfahren (200) nach Anspruch 2, wobei eine Fügelinie (320), die den ersten Abschnitt (310) auf dem Gesamtbild (305) begrenzt, auf der Basis von Perspektiven und Abbildungsparametern der Teilbilder fest vorbestimmt ist.

4. Verfahren (200) nach einem der vorangehenden Ansprüche, wobei das Gesamtbild (305) einen dritten Abschnitt (325) umfasst, der einen zwischen dem Fahrzeug (105) und dem Objekt (110) liegenden Bereich verdeckt, falls sich ein weiteres Objekt (110) in diesem Bereich befindet.

5. Verfahren (200) nach Anspruch 4, wobei der dritte Abschnitt (325) aus dem ersten Teilbild entnommen ist und das Fahrzeug (105) zeigt.

6. Verfahren (200) nach einem der vorangehenden Ansprüche, wobei für mehrere vorbestimmten Abstände zwischen dem Fahrzeug (105) und dem Objekt (110) Anpassungen des zweiten Teilbilds vorbestimmt sind.

7. Verfahren (200) nach Anspruch 6, wobei bezüglich einer ersten vorbestimmten Anpassung, deren zugeordneter Abstand kleiner als der bestimmte Abstand ist, und einer zweiten vorbestimmten Anpassung, deren zugeordneter Abstand größer als der bestimmte Abstand ist, eine Anpassung interpoliert und auf das zweite Teilbild angewendet wird.

8. Verfahren (200) nach einem der vorangehenden Ansprüche, wobei von mehreren Objekten (110) im Umfeld des Fahrzeugs (105), eines ausgewählt (220) wird, dessen Abstand zum Fahrzeug (105) am geringsten ist.

9. Verfahren (200) nach einem der vorangehenden Ansprüche, wobei von mehreren Objekten (110) im Umfeld des Fahrzeugs (105) eines ausgewählt (220) wird, dessen voraussichtliche Zeit bis zum Erreichen des Fahrzeugs (105) am geringsten ist.

10. Verfahren (200) nach einem der vorangehenden Ansprüche, wobei von mehreren Objekten (110) im Umfeld des Fahrzeugs (105), eines ausgewählt (220) wird, das bezüglich einer Kollision mit dem Fahrzeug (105) am empfindlichsten ist.

11. Verfahren (200) nach einem der vorangehenden Ansprüche, wobei ein erster Sensor (115) zur Bereitstellung des ersten Teilbilds auf der Basis eines optisch erfassbaren Merkmals des Fahrzeugs (105) im ersten Bereich kalibriert wird.

12. Verfahren (200) nach einem der vorangehenden Ansprüche, wobei ein zweiter Sensor (120) zur Bereitstellung des zweiten Teilbilds mittels eines Lagesensors (140) kalibriert wird.

13. Vorrichtung (100) zum Zusammenfügen von Teilbildern eines Umfelds eines Fahrzeugs (105) zu einem Gesamtbild (305), wobei die Vorrichtung (100) folgende Elemente umfasst:
- einen ersten Sensor (115) zur Erfassung eines ersten Teilbilds in einem ersten Bereich des Umfelds, wobei der erste Bereich seitlich hinter dem Fahrzeug (105) liegt;
- einen zweiten Sensor (120) zur Erfassung eines zweiten Teilbilds in einem zweiten Bereich des Umfelds, wobei der zweite Bereich hinter dem Fahrzeug (105) liegt;
**gekennzeichnet durch**:
- einen dritten Sensor (125) zur Bestimmung eines Abstands eines Objekts (110), von dem wenigstens ein Abschnitt in einem der Bereiche liegt, vom Fahrzeug (105);
- eine Verarbeitungseinrichtung (130) zur Anpassung des zweiten Teilbilds in Abhängigkeit des Abstands; und zum Zusammenfügen der Teilbilder zum Gesamtbild (305).

14. Vorrichtung (100) nach Anspruch 13, wobei ein Lagesensor (140) zur Bestimmung einer Ausrichtung des zweiten Sensors (120) gegenüber dem Umfeld vorgesehen ist.

15. Fahrzeug (105), umfassend eine Vorrichtung (100) nach Anspruch 13 oder 14.

## Claims

1. Method (200) for combining partial images of a surrounding area of a vehicle (105) into an overall image (305), wherein the method (200) comprises the following steps:
- capturing (205) a first partial image in a first region of the surrounding area, wherein the first region is located laterally behind the vehicle (105);
- capturing (210) a second partial image in a second region of the surrounding area, wherein the second region is located behind the vehicle (105);
- capturing (215) an object (110), of which at least one portion is located in one of the regions;
**characterized by**:
- determining (225) a distance of the object (110) from the vehicle (105);
- adapting (230) the second partial image in dependence on the distance; and
- combining (235) the partial images into the overall image (305).

2. Method (200) according to claim 1, wherein the overall image (305) comprises a first section (310), which is taken from the first partial image and which represents a region of the surrounding area outside the vehicle (105); and a second section (315), which is taken from the second partial image and which represents a region of the surrounding area located behind the vehicle (105).

3. Method (200) according to claim 2, wherein a joining line (320), which delimits the first section (310) on the overall image (305), is firmly predetermined on the basis of perspectives and imaging parameters of the partial images.

4. Method (200) according to one of the preceding claims, wherein the overall image (305) comprises a third section (325), which covers a region located between the vehicle (105) and the object (110), if a further object (110) is located in this region.

5. Method (200) according to claim 4, wherein the third section (325) is taken from the first partial image and shows the vehicle (105).

6. Method (200) according to one of the preceding claims, wherein for a plurality of predetermined distances between the vehicle (105) and the object (110), adaptations of the second partial image are predetermined.

7. Method (200) according to claim 6, wherein with respect to a first predetermined adaptation, whose associated distance is smaller than the determined distance, and a second predetermined adaptation, whose associated distance is greater than the determined distance, an adaptation is interpolated and applied to the second partial image.

8. Method (200) according to one of the preceding claims, wherein from a plurality of objects (110) in the surrounding area of the vehicle (105), one is selected (220) whose distance to the vehicle (105) is the smallest.

9. Method (200) according to one of the preceding claims, wherein from a plurality of objects (110) in the surrounding area of the vehicle (105), one is selected (220) whose anticipated time until reaching the vehicle (105) is the smallest.

10. Method (200) according to one of the preceding claims, wherein from a plurality of objects (110) in the surrounding area of the vehicle (105), one is selected (220) which is the most sensitive with respect to a collision with the vehicle (105).

11. Method (200) according to one of the preceding claims, wherein a first sensor (115) for providing the first partial image is calibrated on the basis of an optically detectable feature of the vehicle (105) in the first region.

12. Method (200) according to one of the preceding claims, wherein a second sensor (120) for providing the second partial image is calibrated by means of a position sensor (140).

13. Apparatus (100) for combining partial images of a surrounding area of a vehicle (105) into an overall image (305), wherein the apparatus (100) comprises the following elements:
- a first sensor (115) for capturing a first partial image in a first region of the surrounding area, wherein the first region is located laterally behind the vehicle (105);
- a second sensor (120) for capturing a second partial image in a second region of the surrounding area, wherein the second region is located behind the vehicle (105);
**characterized by**:
- a third sensor (125) for determining a distance of an object (110), of which at least one portion is located in one of the regions, from the vehicle (105);
- a processing device (130) for adapting the second partial image in dependence on the distance; and for combining the partial images into the overall image (305).

14. Apparatus (100) according to claim 13, wherein a position sensor (140) is provided for determining an orientation of the second sensor (120) with respect to the surrounding area.

15. Vehicle (105), comprising an apparatus (100) according to claim 13 or 14.

## Revendications

1. Procédé (200) pour assembler des images partielles d'un environnement d'un véhicule (105) en une image globale (305), le procédé (200) comprenant les étapes suivantes :
- capturer (205) une première image partielle dans une première région de l'environnement, la première région étant située latéralement derrière le véhicule (105) ;
- capturer (210) une deuxième image partielle dans une deuxième région de l'environnement, la deuxième région étant située derrière le véhicule (105) ;
- capturer (215) un objet (110), dont au moins une portion est située dans l'une des régions ;
**caractérisé par** :
- déterminer (225) une distance de l'objet (110) par rapport au véhicule (105) ;
- adapter (230) la deuxième image partielle en fonction de la distance ; et
- assembler (235) les images partielles en l'image globale (305).

2. Procédé (200) selon la revendication 1, l'image globale (305) comprenant une première section (310), qui est reprise de la première image partielle et qui représente une région de l'environnement à l'extérieur du véhicule (105) ; et une deuxième section (315), qui est extraite de la deuxième image partielle et qui représente une région de l'environnement située derrière le véhicule (105).

3. Procédé (200) selon la revendication 2, une ligne de jonction (320), qui délimite la première section (310) sur l'image globale (305), étant fermement prédéterminée sur la base de perspectives et de paramètres d'imagerie des images partielles.

4. Procédé (200) selon l'une des revendications précédentes, l'image globale (305) comprenant une troisième section (325), qui couvre une région située entre le véhicule (105) et l'objet (110), si un autre objet (110) est situé dans cette région.

5. Procédé (200) selon la revendication 4, la troisième section (325) étant extraite de la première image partielle et montrant le véhicule (105).

6. Procédé (200) selon l'une des revendications précédentes, des adaptations de la deuxième image partielle étant prédéterminées pour plusieurs distances prédéterminées entre le véhicule (105) et l'objet (110).

7. Procédé (200) selon la revendication 6, par rapport à une première adaptation prédéterminée, dont la distance associée est inférieure à la distance déterminée, et une deuxième adaptation prédéterminée, dont la distance associée est supérieure à la distance déterminée, une adaptation étant interpolée et appliquée à la deuxième image partielle.

8. Procédé (200) selon l'une des revendications précédentes, parmi plusieurs objets (110) dans l'environnement du véhicule (105), un étant sélectionné (220) dont la distance au véhicule (105) est la plus petite.

9. Procédé (200) selon l'une des revendications précédentes, parmi plusieurs objets (110) dans l'environnement du véhicule (105), un étant sélectionné (220) dont le temps prévu jusqu'à l'atteinte du véhicule (105) est le plus petit.

10. Procédé (200) selon l'une des revendications précédentes, parmi plusieurs objets (110) dans l'environnement du véhicule (105), un étant sélectionné (220) qui est le plus sensible en ce qui concerne une collision avec le véhicule (105).

11. Procédé (200) selon l'une des revendications précédentes, un premier capteur (115) pour fournir la première image partielle étant calibré sur la base d'une caractéristique optiquement détectable du véhicule (105) dans la première région.

12. Procédé (200) selon l'une des revendications précédentes, un deuxième capteur (120) pour fournir la deuxième image partielle étant calibré au moyen d'un capteur de position (140).

13. Dispositif (100) pour assembler des images partielles d'un environnement d'un véhicule (105) en une image globale (305), le dispositif (100) comprenant les éléments suivants :
- un premier capteur (115) pour capturer une première image partielle dans une première région de l'environnement, la première région étant située latéralement
- un deuxième capteur (120) pour capturer une deuxième image partielle dans une deuxième région de l'environnement, la deuxième région étant située derrière le véhicule (105) ;
**caractérisé par** :
- un troisième capteur (125) pour déterminer une distance d'un objet (110), dont au moins une portion est située dans l'une des régions, par rapport au véhicule (105) ;
- un dispositif de traitement (130) pour adapter la deuxième image partielle en fonction de la distance ; et pour assembler les images partielles en l'image globale (305).

14. Dispositif (100) selon la revendication 13, un capteur de position (140) étant prévu pour déterminer une orientation du deuxième capteur (120) par rapport à l'environnement.

15. Véhicule (105), comprenant un dispositif (100) selon la revendication 13 ou 14.
